# EUROPÄISCHE PATENTSCHRIFT

(11) **EP 1 295 859 B1**
(45) Veröffentlichungstag und Bekanntmachung des Hinweises auf die Patenterteilung: **04.07.2007**
(21) Anmeldenummer: 02450176.9
(22) Anmeldetag: 12.08.2002
(51) Int. Cl.: C04B 41/81, B27K 3/02

(54) **Verfahren zum Konservieren von Gegenständen aus Stein etc. und Vorrichtung zur Durchführung des Verfahrens**
Process and apparatus for preserving articles made of stone etc
Procédé et dispositif de conservation d'objets en pierre etc

(30) Priorität: 17.08.2001 AT 12962001
(43) Veröffentlichungstag der Anmeldung: 26.03.2003
(73) Patentinhaber: Vujasin, Nikola, 1170 Wien (AT)
(72) Erfinder: Vujasin, Nikola, 1170 Wien (AT)
(74) Vertreter: Patentanwälte BARGER, PISO & PARTNER

(56) Entgegenhaltungen:
- AT-B- 408 848
- DE-A- 2 354 437

## Beschreibung

Die Erfindung betrifft ein Verfahren zum Konservieren von Gegenständen aus Stein, Keramik, z.B. Terrakotta, oder Holz, insbesondere von Plastiken, Reliefs, Fassaden bzw. Fassadenteilen, wobei um den oder auf dem zu behandelnden Gegenstand eine luftdichte Umhüllung aus Kunststofffolie angeordnet wird, wobei in der Folie mindestens eine Absaugöffnung und im räumlichen Abstand davon mindestens eine Einlassöffnung vorgesehen ist, worauf an die Absaugöffnung über eine Absaugleitung Vakuum angelegt und der Einlassöffnung über eine Mediumleitung Medium, bevorzugt Konservierungsmedium aus einem Behälter zugeführt wird. Das Verfahren kann auch zum Trocknen von Gegenständen verwendet werden. Die Erfindung betrifft weiters eine Vorrichtung zur Durchführung des Verfahrens.

Ein derartiges Verfahren ist aus der bekanntgemachten Österreichischen Patentanmeldung A 437/2000 bekannt. Dabei wird die Umhüllung gegen Ausbauchungen gesichert, indem Gurten, Bänder, Klebebänder um das Objekt gewickelt werden. Gemäß Ausführungsbeispiel wird die Luft im oberen Bereich des Objektes abgesaugt und nach Erreichen des gewünschten Unterdruckes Konservierungsflüssigkeit von oben in den verbleibenden Zwischenraum eingefüllt, weshalb die Fixierung der Umhüllung notwendig ist.

Nachteilig ist bei diesem Verfahren, dass es wie die bekannten Tauchverfahren arbeitet, da der angelegte Unterdruck mit dem Zuführen der Flüssigkeit schlagartig verloren geht. Das Verfahren erlaubt insbesondere keine Beobachtung und keine Beeinflussung der Strömung der Flüssigkeit und des Eindringens in das Objekt, die überschüssige Flüssigkeit geht beim Öffnen der Umhüllung verloren. Dazu kommt, dass durch das Einfüllen von oben die große Gefahr besteht, dass die Flüssigkeit Luftblasen im Inneren des Objektes einschließt und diese Volumina nicht erfüllt und damit nicht konserviert.

Die GB 1 399 510 A betrifft die Gebäudesanierung, aber auch allgemein die Konservierung von Stein, Ziegel, etc. Sie offenbart ein Verfahren, bei dem das Objekt luftdicht umhüllt wird, bei dem vom Kopfbereich Luft aus der Umhüllung gesaugt und, nach Erreichen des gewünschten Unterdruckes, Konservierungsflüssigkeit im unteren Bereich der Umhüllung (und damit dem Objekt) zugeführt wird, die durch das Weiterlaufen der Vakuumpumpe entlang der Kontaktfläche zwischen Umhüllung und Objekt und auch in dessen Hohlräumen nach oben gesaugt wird, bis es die Auslassstelle erreicht, worauf das Verfahren beendet wird. Nachteilig daran ist, dass es keine Möglichkeit gibt, die ja nur langsam ins Innere des Objektes eindringende Strömung länger aufrecht zu erhalten, was insbesondere bei Kunstobjekten, deren Oberfläche nicht zerstört werden kann, um das Eindringen zu erleichtern, wesentlich ist.

Allgemein ist zur Konservierung von Kunstgegenständen, insbesondere Statuen, Skulpturen oder Plastiken aus Stein, ein Verfahren bekannt, bei dem die zu konservierenden Gegenstände in einem Behälter angeordnet werden, der Behälter verschlossen und dann in diesem ein Vakuum hergestellt wird. Daraufhin wird in den unter Vakuum gehaltenen Behälter ein flüssiges Kunstharz, insbesondere Acrylharz, eingeführt, so daß schließlich der Gegenstand insgesamt in einem Kunstharzbad eingebettet ist und vollständig mit dem Kunstharz getränkt wird.

In weiterer Folge wird der Behälter unter Druck, beispielsweise 25 bar, gesetzt, um so das Acrylharz auszuhärten. Auf diese Weise erhält der ursprünglich aus Naturstein bestehende Kunstgegenstand eine Kunstharzmatrix sowie einen Kunstharzüberzug, wobei der Kunstgegenstand zur Entfernung überflüssigen Kunstharzmaterials von seiner Oberfläche schließlich noch einer Sandstrahlbehandlung unterzogen werden muß. Dabei wird mit dieser Methode in irreversibler Weise der Naturstein, aus dem der Gegenstand ursprünglich angefertigt wurde, in einen Kunststein überführt.

Dieses Verfahren hat neben dem oben angegebenen nachteiligen Effekt darüberhinaus den Nachteil, dass es nicht nur wegen der erforderlichen Nachbehandlung verfahrensmäßig sehr aufwendig ist, sondern auch, dass es nicht in situ sondern nur nach Abmontage und Abtransportieren des Kunstgegenstandes zum Behandlungsort durchgeführt werden kann. Dadurch entstehen neben der ohnehin schon kostspieligen Verfahrensführung noch zusätzlich hohe Kosten.

Des Weiteren ist ein Verfahren zum Konservieren von Kunstgegenständen, wie aus Naturstein hergestellten Skulpturen, Statuen oder Plastiken ähnlich dem eingangs beschriebenen bekannt, bei dem auf dem zu konservierenden Gegenstand in zeitaufwendiger Weise mittels eines Latex Stoff-, insbesondere Flanellstreifen, zur Herstellung eines kompletten Überzuges aufgebracht werden. Um eine luftdichte Umhüllung zu erhalten, müssen die Flanellstreifen mehrmals mit dem Latex eingestrichen werden. In dieser luftdichten Umhüllung wird ein Vakuum hergestellt, wobei schließlich unter Aufrechterhaltung des Vakuums in die Umhüllung ein Konservierungsmedium eingeleitet wird.

In bekannter Weise werden als selbsthärtende Konservierungsmedien bzw. Festigungsmittel Kieselsäureester für aus Sandstein hergestellte Gegenstände und Paraloid B 72 für Gegenstände aus Marmor oder Keramik (Terrakotta) eingesetzt.

Aufgabe der Erfindung ist nun die Schaffung eines Verfahrens, mittels welchem unter Ausschaltung der zuvor geschilderten Nachteile in einfacher und gegenüber dem geschilderten vorbekannten Verfahren wesentlich kostengünstiger Weise die Konservierung von Gegenständen aus Stein, Keramik oder Holz durchgeführt werden kann.

Diese Aufgabe wird erfindungsgemäß dadurch gelöst, dass die Fläche der Kunststofffolie größer ist als die Fläche der Oberfläche des zu behandelnden Gegenstandes und so um diesen oder auf diesem unter Ausbildung eines Zwischenraums angeordnet wird und dass das Vakuum auch aufrecht erhalten wird, wenn das Medium die Absaugöffnung erreicht, und dass in der Absaugleitung ein Flüssigkeitsabscheider angeordnet ist, der mitgerissenes Medium in einen Behälter abscheidet.

Dadurch kann auf einfache Weise die Strömung des Konservierungsmediums unter Vakuum um das und im Objekt auch dann aufrecht erhalten werden, wenn die Flüssigkeit bereits bis zur Absaugöffnung gelangt ist. Die Einlassöffnung wird dabei möglichst tief und die Absaugöffnung möglichst hoch angeordnet.

In einer Ausgestaltung der Erfindung ist vorgesehen, dass zwei Vorratstanks vorgesehen sind, und dass beim Erreichen eines vorbestimmten Füllstandes im ersten Vorratstank die Absaugöffnung mit dem zweiten Vorratstank verbunden wird und dass gegebenenfalls der erste Vorratstank mit der Einlassöffnung verbunden wird. Auf diese Weise kann man mit einem Minimum an Flüssigkeitsüberschuß die Strömung beliebig lange aufrecht erhalten, ohne dass giftige Dämpfe entweichen oder ein zwischenzeitlicher Abfall des Vakuums eintritt.

Mittels der Kunststofffolie kann in vorteilhafter Weise auf sehr einfachem Wege eine leicht luftdicht verkleb- oder verschweissbare Umhüllung um einen bzw. auf einem zu behandelnden Gegenstand hergestellt werden. Um die Ausbildung eines Zwischenraumes zwischen Gegenstand und Kunststofffolie sowie ein loses Anliegen der Folie an allen Flächen des Gegenstandes ohne Beschädigungsgefahr an abstehenden Teilen insbesondere durch Zugkräfte beim Aufbau des Vakuums im Zwischenraum zu gewährleisten, wird die Kunststofffolie im Verhältnis zur Größe der Oberfläche des Gegenstandes im Überschuß, d.h. unter Bildung von Falten um den bzw. auf dem Gegenstand angeordnet. Dadurch ist auch gewährleistet, daß in die Umhüllung injiziertes Konservierungsmedium zwischen Kunststofffolie und Gegenstand strömen und sich verteilen kann.

Ein weiterer Vorteil des erfindungsgemäßen Verfahrens liegt darin, dass der zu behandelnde Gegenstand an Ort und Stelle belassen und die Konservierungsbehandlung in situ vorgenommen werden kann. Dabei können mit diesem Verfahren Plastiken, Skulpturen, Reliefs, Fassaden und Fassadenteile aus Stein, Keramik oder auch Holz behandelt werden.

Einen anderen Vorteil bringt das erfindungsgemäße Verfahren auch für die Arbeit im Atelier insofern mit sich, als wie bisher wegen der schädlichen Dämpfe ein eigener Raum notwendig war, ein solcher nunmehr aber entbehrlich ist, da die Menge der entweichenden Lösungsmitteldämpfe wesentlich verringert ist und diese zur Gänze durch die Vakuumpumpe kontrolliert abgeleitet/ausgefiltert werden können und keine Geruchsbelästigung entsteht.

Die Bezeichnung "Zwischenraum" ist so zu verstehen, dass durch den Überschuß der Fläche der Kunststofffolie im Vergleich zur Fläche der Oberfläche des zu behandelnden Gegenstandes ein Zwischenraum ausbildet, der beim Anlegen des Vakuums zum Anlegen der Folie an der Oberfläche des Gegenstandes unter Ausbildung von Falten führt. Das Konservierungsmedium bewegt sich trotz dieses "Anliegens" zwischen der Oberfläche des Gegenstandes und der inneren Oberfläche der Kunststofffolie, sodass im Sinne der Erfindung auch weiterhin von einem Zwischenraum gesprochen wird.

Nach einem Merkmal der Erfindung wird als Umhüllung eine transparente Kunststofffolie eingesetzt, so dass die Vorgänge bei der Konservierung jederzeit unmittelbar beobachtet und gesteuert werden können.

Gemäß einer Ausführungsform des erfindungsgemäßen Verfahrens erfolgt die Zuführung von Konservierungsmedium in den Zwischenraum an räumlich voneinander getrennten Stellen. Auf diese Weise ist es durch Anbringung von Einlassöffnungen, durch die Konservierungsmedium in den Zwischenraum injiziert werden kann, an jeder gewünschten Stelle möglich, Konservierungsmedium auch an Bereiche heranzubringen, zu denen das Konservierungsmedium normalerweise nicht vordringen kann (z.B. vorstehende Teile, abstehende Arme oder Attribute). Durch den Einsatz einer Kunststofffolie als Umhüllung ist auf ganz einfach zu bewerkstelligende Weise möglich, Injektionen von Konservierungsmedium an jeder beliebigen Stelle vorzunehmen.

Besonders vorteilhaft ist es, wenn die Zuführung von Konservierungsmedium in den Zwischenraum von unten her und die Absaugung zur Herstellung bzw. Aufrechterhaltung des Vakuums in einem oberhalb der Einlassöffnung(en) gelegenen Bereich erfolgt.

Durch das über eine Vakuumpumpe und die im oberen Bereich der Umhüllung angeordnete Absaugöffnung im Zwischenraum angelegte Vakuum wird Konservierungsmedium durch eine jedenfalls im unteren Bereich der Umhüllung vorgesehene Einlassöffnung in den Zwischenraum in Richtung der Absaugöffnung geführt. Dabei wird einerseits die Oberfläche des Gegenstandes mit dem Konservierungsmedium kontaktiert und anderseits kann Medium in die Porenräume des zu konservierenden Gegenstandes eindringen.

Verfahrensgemäß ist es möglich, unter Aufrechterhaltung des Vakuums im Zwischenraum zwischen Umhüllung und Gegenstand den Konservierungsvorgang kreislaufähnlich zu führen, wobei durch die Absaugöffnung mitabgesaugtes Konservierungsmedium aus dem abgesaugten Strom abgeschieden wird, bevor es die Vakuumpumpe erreicht. Das abgeschiedene Konservierungsmedium wird in einem Behälter gesammelt, der mit einem weiteren Behälter, aus dem das Konservierungsmedium in die Umhüllung zugeführt wird, in Verbindung steht. Durch Umschalten von Ventilen kann die Zuführung von Konservierungsmedium in die Umhüllung vom Sammelbehälter her erfolgen, wobei dann der andere Behälter zum Auffangbehälter für mitabgesaugtes Konservierungsmedium wird.

Gemäß einem Merkmal der Erfindung wird mit einem Vakuum von 50 bis 1000 mbar gearbeitet.

Eine Ausführungsform des erfindungsgemäßen Verfahrens besteht darin, dass der zu behandelnde Gegenstand, insbesondere an gefährdeten Teilen, wie Hinterschneidungen oder zarten, abstehenden Bereichen, mit einem Kunststoffnetz oder einem mageren, für das Konservierungsmedium durchlässigen, nach Behandlung des Gegenstandes leicht entfernbaren Mörtel abgedeckt und gesichert wird, bevor die luftdichte Umhüllung um den bzw. auf dem Gegenstand angeordnet und das Vakuum im Zwischenraum zwischen Umhüllung und Gegenstand angelegt wird.

Die Umhüllung wirkt unter dem angelegten Vakuum zwar grundsätzlich immer im Winkel von 90° auf den Gegenstand, doch werden durch die oben angegebenen Maßnahmen in wirksamer Weise von vorne herein Beschädigungen von vom zu behandelnden Gegenstand abstehenden Teilen sowie der Kunststofffolie der Umhüllung vermieden.

Die im erfindungsgemäßen Verfahren einzusetzenden Konservierungsmittel entsprechen im wesentlichen den in der Steinrestaurierung bewährten Materialien, wie Paraloid B 72, beispielsweise in einem 7 %-igen Lösungsmittelgemisch für Marmor und Kieselsäureester für Sandstein, Kalkstein oder Terrakotta.

Nach genauer Befunderhebung des Zustandes des zu konservierenden Gegenstandes sollte vor Beginn und nach Beendigung des Behandlungsverfahrens eine Ultraschalluntersuchung durchgeführt werden. Wünschenswert ist auch gegebenenfalls eine 8-10 mm Kernbohrung ebenfalls vor und nach des Behandlungsverfahrens zur Überprüfung der Eindringtiefe des Konservierungsmediums.

Vor Beginn des Konservierungsverfahrens kann in einem kreislaufartig geführten Verfahrenssystem auch eine Dehydration des beispielsweise aus Stein oder Holz bestehenden zu konservierenden Gegenstandes durchgeführt werden, indem unter leichtem Vakuum ein geschlossener Luftkreislauf geschaffen, bei dem die Luft erwärmt und anschließend getrocknet wird.

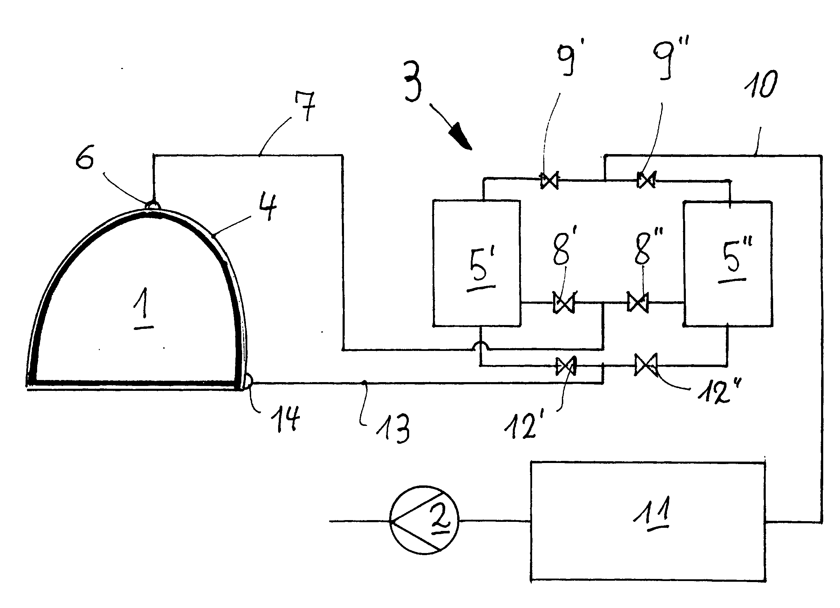

Eine Vorrichtung zur Durchführung des erfindungsgemäßen Verfahrens ist in der Zeichnung schematisch dargestellt. Dabei zeigt die einzige Figur eine schematische Ansicht einer erfindungsgemäßen Vorrichtung.

Wie aus der Figur ersichtlich ist, besteht die erfindungsgemäße Vorrichtung zur Behandlung eines Gegenstandes 1 (beispielsweise einer Plastik aus Stein) im wesentlichen aus einer Vakuumpumpe 2, einer in ihrer Gesamtheit mit 3 bezeichneten Vorratseinheit, einer Umhüllung 4 und verschiedenen Leitungen und Ventilen. Der Aufbau ist im Detail der folgende:

Der Gegenstand 1 ist von der Umhüllung 4 dicht umgeben. In der Umhüllung 4 ist nahe des Kopfbereiches eine Absaugstelle 6 vorgesehen, die beispielsweise aus einem mit der Umhüllung verschweißten Stutzen, gegebenenfalls mit einem Absperrventil, bestehen kann. Von der Absaugstelle 6 führt eine Absaugleitung 7 über einen Verteiler und jeweils ein Absperrventil 8',8" zu zwei Vorratsbehältern 5',5" und mündet in einem Bereich unterhalb der Mitte der Höhe des jeweiligen Vorratsbehälters in diesen. Der Kopfbereich jedes der Vorratsbehälter 5',5" ist mittels eines Absperrventils 9',9" und eines Verteilers mit einer Vakuumleitung 10 verbunden, die bevorzugt über eine nicht dargestellte Filtervorrichtung für das jeweils anfallende Lösungsmittel zu einem Vakuumvorratstank 11 führt, der mit der Vakuumpumpe 2 in Verbindung steht. Die Einmündung der Leitung 7 in die Behälter 5 bewirkt die Abscheidung der mitgerissenen Flüssigkeit, die sich im Behälter sammelt.

Im Kopfbereich jedes der Vorratsbehälters 5',5" ist entweder ein Lüftungsventil vorgesehen oder es sind die Absperrventile 9',9" als Zwei-Dreiwegeventile ausgebildet, die in einer der möglichen Stellungen den jeweiligen Vorratstank lüften.

Vom Bodenbereich jedes Vorratsbehälters 5',5" führt, über jeweils ein Absperrventil 12',12" und einen Verteiler eine Mediumsleitung 13 zu einem Einlaß 14 im Bodenbereich der Umhüllung 4. Der Einlaß kann so wie die Absaugstelle 6 ausgebildet sein.

Die Funktionsweise ist folgende, wobei von der folgenden Startsituation ausgegangen wird: In den Vorratsbehälter 5' wird das gewünschte Medium eingefüllt, wobei der Kopfbereich des Vorratsbehälters frei bleibt. Das am Boden befindliche Absperrventil 12' ist so wie das Absperrventil 12" geschlossen, eventuell am Einlass 14 bzw. an der Absaugstelle 6 befindliche Ventile sind geöffnet. Das Absperrventil 8' der Absaugleitung 7 ist geschlossen, das Absperrventil 8" geöffnet. Das Absperrventil 9' ist geschlossen, das Absperrventil 9" geöffnet, sodaß die Absaugstelle 6 über den Abscheidebehälter 5" mit der Vakuumleitung 10, dem Vorratstank 11 und der Vakuumpumpe 2 verbunden ist.

Es wird nunmehr die Vakuumpumpe in Betrieb genommen, worauf Luft aus der Umhüllung abgesaugt wird und nach einiger Zeit Vakuum bis zu den Ventilen 12',12" anliegt. Nunmehr wird - je nach Ausrüstung - entweder das Zwei-Dreiwegeventil 9' so gestellt, dass der Vorratsbehälter 5' belüftet ist, oder es wird das entsprechende Belüftungsventil geöffnet, sodann wird das Absperrventil 12' geöffnet und Medium durch die Medienleitung 13 zum Gegenstand 1 gesaugt, wobei es im Zwischenraum aufsteigt und in die Poren des Gegenstandes eindringt.

Nach einiger Zeit, die bis zu mehreren Stunden betragen kann, erreicht das flüssige Medium die Absaugstelle 6. Bei der Absaugstelle 6 abgesaugtes, überschüssiges Medium gelangt durch die Absaugleitung 7 und das Absaugventil 8" in den Abscheidebehälter 5", wo es sich abscheidet. Nur flüchtige Komponenten, beispielsweise Lösungsmittel, werden über die Vakuumleitung 10 zum Vorratstank 11 abgezogen und durch die Pumpe 2 abgeführt oder im oben erwähnten, nicht dargestellten Filter gesammelt.

Wenn der Vorratsbehälter 5' nahezu leer ist, wird, bei ausreichender Füllung des Abscheidebehälters 5", die Lüftung des Vorratsbehälters 5' unterbrochen, die Absperrventile 8', 9" und 12' werden geschlossen, der Abscheidebehälter 5" wird gelüftet und die Absperrventile 8', 9' und 12" werden geöffnet. Dadurch wird Medium aus dem nun als Vorratsbehälter arbeitenden Vorrats- bzw. Abscheidebehälter 5" zum Gegenstand 1 gesaugt und das überschüssige Medium wird im nunmehr als Abscheidebehälter arbeitenden Vorrats- bzw. Abscheidebehälter 5' abgeschieden. Dabei bleibt das Vakuum während des gesamten Festigungsvorganges erhalten, wobei das flüssige Konservierungsmedium in einem Vakuumkreislauf in den Gegenstand 1 eingebracht wird, wodurch es abkühlt. Das Kühlmedium ist somit als "kaltkochend" zu bezeichnen.

Wenn Medium nachgefüllt werden soll, so kann dies bei ansonsten geschlossenen Ventilen durch eine verschließbare Einfüllöffnung erfolgen oder es wird das Medium durch eine Abzweigleitung, die beispielsweise von der Medienleitung 13 ausgeht und über ein Ventil verfügt, aus einem (nicht dargestellten) Behälter in das System gesaugt. Letzteres ist insbesondere beim Start des Verfahrens empfehlenswert, da man sich das Umfüllen des Mediums aus dem Originalbehälter in den Behälter 5' erspart.

Wie bereits erwähnt ist vor der Vakuumpumpe 2, bevorzugt noch vor dem Vorratstank 11 bei den meisten Anwendungsgebieten ein Filter oder ein spezieller Flüssigkeitsabscheider vorgesehen, um giftige, korrosive oder auf andere Weise unangenehme Bestandteile zu eliminieren. Desgleichen kann auf vorteilhafte Weise vor der Vakuumpumpe 2 eine Zumischung einer geringen Menge an Umgebungsluft erfolgen, um eventuell für die Pumpe schädliche Bestandteile zu verdünnen.

In der Praxis werden üblicherweise mehrere Einlässe 14 vorgesehen, um unterschiedliche Ströme im Zwischenraum zu schaffen, aus den gleichen Gründen sind zumeist auch mehrere Absaugstellen 6 vorgesehen. Um hier ein Umschalten bzw. Umrüsten zu erleichtern, sind diese Öffnungen mit Ventilen versehen, die nur dann geöffnet sind, wenn die entsprechende Leitung aufgesteckt, angeschraubt, etc. ist. Damit wird der Abbau des Vakuums und der Verlust von Medium zuverläßig vermieden.

Die erfindungsgemäße Vorrichtung erlaubt es, das Medium mit merklicher Geschwindigkeit im Zwischenraum zu bewegen und so für eine hervorragende Benetzung der gesamten Oberfläche des Gegenstandes zu sorgen, ohne dass Medium verlorengeht oder die Pumpe beschädigt. Durch diese Bewegung und zufolge des Vakuumeffektes wird das Eindringen in die Hohlräume des Gegenstandes merklich gefördert und die Bearbeitungszeit verkürzt.

Durch das Abscheiden des überschüssigen Mediums ist es möglich, die schwere Vakuumpumpe 2 samt Vorratstank 11 in großem Abstand von der Vorratseinheit 3 anzuordnen, sodass bei Behandlungen in situ die bisher unvermeidlichen Transport- und Raumprobleme weitgehend entfallen.

Die verwendeten Materialien hängen vom verwendeten Medium ab, Folien aus Polyethylen und in der Drucklufttechnik übliche Fittings, Armaturen und Dichtungen sind zumeist geeignet. Die Abdichtung der Umhüllung 4 gegenüber der Umgebung kann beispielsweise mittels Silikon, mittels Klemmvorrichtungen oder auf andere Weise erfolgen und hängt vom vorhandenen Untergrund und der Form des Bereiches, in dem die Abdichtung erfolgen soll, ab.

Die Erfindung ist nicht auf das dargestellte Ausführungsbeispiel beschränkt, sondern kann verschiedentlich abgewandelt werden. So dient der Vakuumvorratstank 11 dazu, einen "Vorrat" an Vakuum zu schaffen, um mit einer kleineren, leichteren und weniger Strom verbrauchenden Pumpe auszukommen, als es ohne Vorratstank möglich wäre. Dabei evakuiert die Pumpe den Vorratstank 11 schon zu einer Zeit, in der rund um den Gegenstand 1 Vorbereitungen zur Behandlung getroffen werden. Zu Beginn der Behandlung wird der Bereich des Gegenstandes durch das Volumen des Vorratstanks 11 rasch evakuiert, wodurch die Behandlungszeit verkürzt wird. Darüberhinaus kann das Eindringen von Luft, insbesondere bei in situ Arbeiten an unzugänglichen Stellen eines Gebäudes leicht möglich, in einem Umfang abgefangen und ausgeglichen werden, wie es ohne derartigen Vorratstank nicht möglich wäre.

Wenn eine solche Beschleunigung nicht notwendig oder nicht angestrebt wird, kann auf den Tank selbstverständlich verzichtet werden, ohne dass die anderen Vorzüge der Erfindung verloren gingen.

Bei einer einfachen Ausführung der erfindungsgemäßen Vorrichtung kann auf einen der beiden Vorrats- bzw. Abscheidebehälter 5',5" verzichtet werden, statt seiner wird das Medium aus einem Kübel od.dergl. gesaugt, der verbliebene Vorrats- bzw. Abscheidebehälter wird als ausschließlich als Abscheidebehälter verwendet. Wenn er so voll ist, dass ein Übertritt von Medium in die Vakuumleitung 10 zu befürchten ist, wird er -- nach dem Schließen der entsprechenden Ventile - in den Kübel geleert und steht erneut als Abscheidebehälter zur Verfügung. Nachteilig ist hier nicht nur das offene Hantieren mit Medium (Austritt unangenehmer, oft giftiger und/oder korrosiver Dämpfe), sondern auch, dass die Zahl der zueinander beweglichen Baugruppen zunimmt, doch sind die Hauptvorteile der Erfindung, die Wiederverwendbarkeit des überschüssigen Mediums, und die Möglichkeit, das Medium lange bewegt zu halten, auch hier gewährleistet.

## Patentansprüche

1. Verfahren zum Konservieren von Gegenständen aus Stein, Keramik, z.B. Terrakotta, oder Holz, insbesondere von Plastiken, Reliefs, Fassaden bzw. Fassadenteilen, wobei um den oder auf dem zu behandelnden Gegenstand eine luftdichte Umhüllung aus Kunststofffolie angeordnet wird, wobei in der Folie mindestens eine Absaugöffnung und im räumlichen Abstand davon mindestens eine Einlassöffnung vorgesehen ist, worauf an die Absaugöffnung über eine Absaugleitung Vakuum angelegt wird und wobei das Vakuum auch aufrecht erhalten wird, wenn das Medium die Absaugöffnung erreicht, und wobei an der Einlassöffnung über eine Mediumleitung Medium, bevorzugt Konservierungsmedium aus einem Behälter, zugeführt wird, **dadurch gekennzeichnet, dass** die Fläche der Kunststofffolie größer ist als die Fläche der Oberfläche des zu behandelnden Gegenstandes und so um diesen oder auf diesem unter Ausbildung eines Zwischenraums angeordnet wird, und dass die Zufuhr des Mediums aufrecht bleibt, auch wenn das Medium die Absaugöffnung erreicht hat, sodass die Strömung des Mediums um den Gegenstand herum und in seinem Inneren weiter aufrecht erhalten wird, und dass in der Absaugleitung ein Flüssigkeitsabscheider angeordnet ist, der mitgerissenes Medium in einen Behälter (5',5") abscheidet.

2. Verfahren nach Anspruch 1, **dadurch gekennzeichnet, dass** zwei Behälter (5',5") vorgesehen sind, von denen der eine als Abscheidebehälter und der andere als Vorratsbehälter verwendet werden und dass beim Erreichen vorgegebener Füllstände ihre Funktion getauscht wird.

3. Verfahren nach Anspruch 1 oder 2, **dadurch gekennzeichnet, dass** als Umhüllung eine transparente Kunststofffolie eingesetzt wird.

4. Verfahren nach einem der voranstehenden Ansprüche, **dadurch gekennzeichnet, dass** die Zuführung von Konservierungsmedium in den Zwischenraum an räumlich voneinander getrennten Stellen erfolgt.

5. Verfahren nach einem der voranstehenden Ansprüche, **dadurch gekennzeichnet, dass** die Zuführung von Konservierungsmedium in den Zwischenraum von unten her und die Absaugung zur Herstellung bzw. Aufrechterhaltung des Vakuums in einem oberhalb der Einlassöffnung(en) gelegenen Bereich erfolgt.

6. Verfahren nach einem der voranstehenden Ansprüche, **dadurch gekennzeichnet, dass** durch die Absaugöffnung mit abgesaugtes Konservierungsmedium aus dem Absaugstrom abgeschieden und zur Wiederverwendung gesammelt wird.

7. Verfahren nach einem der voranstehenden Ansprüche, **dadurch gekennzeichnet, dass** mit einem Vakuum von 50 bis 1000 mbar gearbeitet wird.

8. Verfahren nach einem der voranstehenden Ansprüche, **dadurch gekennzeichnet, dass** der zu behandelnde Gegenstand, insbesondere an gefährdeten Teilen, wie Hinterschneidungen oder zarten, abstehenden Bereichen, mit einem Kunststoffnetz oder einem mageren, für das Konservierungsmedium durchlässigen, nach Behandlung des Gegenstandes leicht entfernbaren Mörtel abgedeckt und gesichert wird, bevor die luftdichte Umhüllung um den bzw. auf dem Gegenstand angeordnet und das Vakuum im Zwischenraum zwischen Umhüllung und Gegenstand angelegt wird.

9. Vorrichtung zur Durchführung des Verfahrens nach einem der Ansprüche 1 bis 8, mit einem Vorratsbehälter (5", 5') für das Medium, von dem eine Mediumleitung (13) zu zumindest einer Einlaßöffnung (14) in einer Folienumhüllung (4) des zu konservierenden Objektes (1) führt, wobei in der Folienumhüllung (4) zumindest eine Absaugöffnung (6) vorgesehen ist, die mittels einer Vakuumleitung (10) mit einer Vakuumpumpe (2) verbunden ist, **dadurch gekennzeichnet, dass** in der Vakuumleitung (10) ein Abscheidebehälter (5', 5") vorgesehen ist und dass die beiden Behälter (5',5") jeweils wahlweise über Ventile (8',8"; 9*'*,9"; 12',12") in die Vakuumleitung (10) und die Absaugleitung (7) bzw. in die Mediumleitung (13) geschalten sind, und dass die beiden Behälter (5',5") in ihrem oberen Bereich mit der Umgebungsluft in Verbindung gebracht werden können.

10. Vorrichtung nach Anspruch 9, **dadurch gekennzeichnet, dass** in der Vakuumleitung (10) ein Vakuumvorratstank (11) angeordnet ist.

11. Vorrichtung nach Anspruch 9 oder 10, **dadurch gekennzeichnet, dass** der Vakuumleitung (10) knapp vor der Vakuumpumpe (2) ein geringer Strom Umgebungsluft zugeführt wird.

12. Vorrichtung nach einem der Ansprüche 9 bis 11, **dadurch gekennzeichnet, dass** vor dem Vakuumvorratstank (11) ein Filter, insbesondere Aktivkohlefilter, für anfallendes flüchtiges Medium angeordnet ist.

## Claims

1. Process for preserving articles made of stone, ceramics, for example terracotta or wood, in particular of sculptures, reliefs, façades or façade parts, an air-tight sheathing made of plastics material film being arranged around or on the article to be treated, at least one suction opening and, set spatially apart therefrom, at least one inlet opening being provided in the film, whereon a vacuum is applied to the suction opening via a suction line and the vacuum also being maintained when the medium reaches the suction opening, and medium, preferably preservative medium from a container, being supplied at the inlet opening via a medium line, **characterised in that** the area of the plastics material film is larger than the area of the surface of the article to be treated and is thus arranged around the article or on the article, forming an interval, and **in that** the supply of the medium is maintained even once the medium has reached the suction opening, so the flow of the medium around the article and in the interior thereof is further maintained, and **in that** a liquid separator, which separates entrained medium into a container (5', 5"), is arranged in the suction line.

2. Process according to Claim 1, **characterised in that** two containers (5', 5") are provided, one of which is used as a separating container and the other as a supply container and **in that** their functions are exchanged on reaching predetermined levels.

3. Process according to either Claim 1 or Claim 2, **characterised in that** a transparent plastics material film is used as the sheathing.

4. Process according to any one of the preceding claims, **characterised in that** the preservative medium is supplied into the interval at points spatially separated from one another.

5. Process according to any one of the preceding claims, **characterised in that** the preservative medium is supplied into the interval from below and the suction for producing or maintaining the vacuum is carried out in a region located above the inlet opening(s).

6. Process according to any one of the preceding claims, **characterised in that** preservative medium also removed by suction-filtration is separated from the suction stream and collected for reuse through the suction opening.

7. Process according to any one of the preceding claims, **characterised in that** a vacuum of from 50 to 1,000 mbar is used.

8. Process according to any one of the preceding claims, **characterised in** the article to be treated is covered and secured, in particular at endangered portions such as undercuts or delicate, protruding regions, with a plastics material lattice or a thin mortar, which is permeable to the preservative medium and can easily be removed after the treatment of the article, before the air-tight sheathing is arranged around or on the article and the vacuum is applied in the interval between the sheathing and article.

9. Apparatus for carrying out the process according to any one of Claims 1 to 8, comprising a storage container (5", 5') for the medium, from which a medium line (13) leads to at least one inlet opening (14) in a sheet sheathing (4) of the object (1) to be preserved, there being provided in the sheet sheathing (4) at least one suction opening (6) which is connected to a vacuum pump (2) using a vacuum line (10), **characterised in that** a separating container (5', 5") is provided in the vacuum line (10) and **in that** the two containers (5', 5") are each selectively connected into the vacuum line (10) and the suction line (7) or into the medium line (13) via valves (8', 8"; 9', 9"; 12', 12") and **in that** the upper region of the two containers (5', 5") can be brought into connection with the ambient air.

10. Apparatus according to Claim 9, **characterised in that** a vacuum supply tank (11) is arranged in the vacuum line (10).

11. Apparatus according to either Claim 9 or Claim 10, **characterised in that** a low stream of ambient air is supplied to the vacuum line (10) just before the vacuum pump (2).

12. Apparatus according to any one of Claims 9 to 11, **characterised in that** a filter, in particular an activated carbon filter, is arranged in front of the vacuum supply tank (11) for volatile medium which accumulates.

## Revendications

1. Procédé de conservation d'objets en pierre, en céramique, par exemple en terre cuite, ou en bois, en particulier de sculptures, de reliefs, de façades ou d'éléments de façades, sachant qu'une enveloppe en film plastique étanche à l'air est disposée autour de l'objet à traiter ou sur cet objet, sachant qu'au moins une ouverture d'aspiration et, à distance spatiale de celle-ci, au moins une ouverture d'admission sont prévues dans le film, à la suite de quoi un vide est appliqué à l'ouverture d'aspiration par l'intermédiaire d'une conduite d'aspiration, et sachant que le vide est maintenu même lorsque le fluide atteint l'ouverture d'aspiration, et sachant qu'un fluide, de préférence du fluide de conservation provenant d'un récipient, est apporté à l'ouverture d'admission par l'intermédiaire d'une conduite de fluide, **caractérisé en ce que** la superficie du film plastique est supérieure à la superficie de la surface de l'objet à traiter et le film est disposé autour de cet objet ou sur cet objet en formant un espace intermédiaire, et **en ce que** l'apport du fluide est maintenu même lorsque le fluide a atteint l'ouverture d'aspiration, de sorte que l'écoulement de fluide autour de l'objet et à l'intérieur de l'objet continue à être maintenu, et **en ce qu'**un séparateur de liquide est disposé dans la conduite d'aspiration, lequel sépare le fluide entraîné dans un récipient (5', 5").

2. Procédé selon la revendication 1, **caractérisé en ce qu'**il est prévu deux récipients (5', 5") dont l'un est utilisé comme récipient de séparation et l'autre comme récipient de stockage, et **en ce que** leur fonction est permutée à l'atteinte de niveaux de remplissage prédéfinis.

3. Procédé selon la revendication 1 ou 2, **caractérisé en ce qu'**on utilise comme enveloppe un film plastique transparent.

4. Procédé selon l'une des revendications précédentes, **caractérisé en ce que** l'apport de fluide de conservation dans l'espace intermédiaire s'effectue en des endroits spatialement séparés les uns des autres.

5. Procédé selon l'une des revendications précédentes, **caractérisé en ce que** l'apport de fluide de conservation dans l'espace intermédiaire s'effectue par le bas et l'aspiration pour réaliser ou maintenir le vide s'effectue dans une région située au-dessus de la ou des ouvertures d'admission.

6. Procédé selon l'une des revendications précédentes, **caractérisé en ce que** le fluide de conservation conjointement aspiré par l'ouverture d'aspiration est séparé du flux aspiré et recueilli afin d'être réutilisé.

7. Procédé selon l'une des revendications précédentes, **caractérisé en ce qu'**on travaille avec un vide de 50 à 1000 mbars.

8. Procédé selon l'une des revendications précédentes, **caractérisé en ce que** l'objet à traiter, en particulier sur les parties exposées telle que contre-dépouilles ou régions tendres en saillie, est, avant que l'enveloppe étanche à l'air soit disposée autour de l'objet ou sur cet objet et que le vide soit appliqué dans l'espace intermédiaire entre l'enveloppe et l'objet, recouvert et protégé par un filet en matière synthétique ou par un mortier maigre laissant passer le fluide de conservation et pouvant être facilement enlevé à la suite du traitement de l'objet.

9. Dispositif pour la mise en oeuvre du procédé selon l'une des revendications 1 à 8, avec un récipient de stockage (5", 5') pour le fluide, à partir duquel une conduite de fluide (13) mène à au moins une ouverture d'admission (14) dans une enveloppe en film (14) de l'objet (1) à conserver, sachant qu'au moins une ouverture d'aspiration (6) est prévue dans l'enveloppe en film (4), ouverture qui est reliée par l'intermédiaire d'une conduite de vide (10) à une pompe à vide (2), **caractérisé en ce qu'**un récipient de séparation (5', 5") est prévu dans la conduite de vide (10) et **en ce que** les deux récipients (5', 5") sont chacun sélectivement branchés, par l'intermédiaire de soupapes (8', 8" ; 9', 9" ; 12', 12"), dans la conduite de vide (10) et dans la conduite d'aspiration (7) ou dans la conduite de fluide (13), et **en ce que** les deux récipients (5', 5") peuvent être amenés dans leur région supérieure en communication avec l'air ambiant.

10. Dispositif selon la revendication 9, **caractérisé en ce qu'**un réservoir de stockage de vide (11) est disposé dans la conduite de vide (10).

11. Dispositif selon la revendication 9 ou 10, **caractérisé en ce qu'**un faible flux d'air ambiant est apporté à la conduite de vide (10) juste avant la pompe à vide (2).

12. Dispositif selon l'une des revendications 9 à 11, **caractérisé en ce qu'**un filtre, notamment un filtre à charbon actif, pour le fluide volatile produit est disposé avant le réservoir de stockage de vide (11).
